# EUROPÄISCHE PATENTSCHRIFT

(11) **EP 3 880 049 B1**
(45) Veröffentlichungstag und Bekanntmachung des Hinweises auf die Patenterteilung: **18.05.2022**
(21) Anmeldenummer: 20705630.0
(22) Anmeldetag: 07.02.2020
(51) Int. Cl.: A47J 43/07, A47J 45/06

(54) **BEHÄLTER MIT UNIVERSELL EINSETZBARER NICHT SICHTBARER GRIFFBEFESTIGUNG ZUR VERWENDUNG MIT HAUSHALTSGERÄTEN**
CONTAINER HAVING UNIVERSALLY USABLE, HIDDEN HANDLE FASTENING FOR USE WITH DOMESTIC APPLIANCES
RÉCIPIENT À FIXATION DE POIGNÉE POUVANT ÊTRE UNIVERSELLEMENT INSÉRÉE DESTINÉ À L'UTILISATION AVEC DES APPAREILS ÉLECTROMÉNAGERS

(30) Priorität: 08.02.2019 DE 202019100726 U
(43) Veröffentlichungstag der Anmeldung: 22.09.2021
(73) Patentinhaber: De'Longhi Braun Household GmbH, 63263 Neu-Isenburg (DE)
(72) Erfinder: PERSICH, Andreas, 97900 Külsheim-Steinbach (DE); KREUTZ, Norbert, 61273 Wehrheim (DE); UNGERER, Markus, 64367 Mühltal (DE); WUTTIG, Sven, 64347 Griesheim (DE); ESSMANN, Hannes, 60431 Frankfurt (DE)
(74) Vertreter: Hoffmann Eitle
(86) Internationale Anmeldenummer: PCT/EP2020/053126
(87) Internationale Veröffentlichungsnummer: WO 2020/161299

(56) Entgegenhaltungen:
- EP-A1- 1 396 220
- WO-A1-2008/114283
- DE-A1- 2 712 273
- GB-A- 976 986
- US-A- 5 988 419

## Beschreibung

### TECHNISCHES GEBIET

Die vorliegende Erfindung betrifft einen Behälter für Haushaltsgeräte. Als Haushaltsgeräte werden im vorliegenden Zusammenhang insbesondere Blender, Mixer, Handblender, Food Prozessoren, Entsafter, Kaffeemaschinen, Wasserkocher und Bügelstationen verstanden.

### STAND DER TECHNIK

Viele Haushaltsgeräte (z.B. Standmixer) weisen Behälter auf, die typischerweise für die Aufbewahrung oder Verwertung von Nahrung gedacht sind. Einige dieser Haushaltsgeräte und der entsprechenden Behälter gibt es in verschiedenen Ausführungen, wobei einige Ausführungen einen Glasbehälter aufweisen, andere einen Kunststoffbehälter von gleicher Größe und Gestaltung. An die verwendeten Glasbehälter werden häufig auch Kunststoffgriffe angebracht, da im Griff ein Hohlraum zum Unterbringen von Sicherheits- oder Verriegelungsmechanismen benötigt wird. Aufgrund der bekannten Befestigungsmöglichkeiten von Kunststoffgriffen an Glaskrügen kann aber normalerweise kein übereinstimmendes Design von Kunststoffgriffen an Glaskrügen und Griffen von Vollkunststoffkrügen erreicht werden.

Die bekannten Befestigungsmöglichkeiten von Griffgeometrien aus Kunststoff an Glaskrügen werden oft durch Abdecken eines innenliegenden Glasgriffes realisiert. Der Glasgriff wird für die Stabilität und Verankerung der Kunststoffteile am Glaskrug benutzt. Eine zusätzliche Integration von Sicherheitselementen zur Abfrage der Deckelposition führt dann zu einer sehr großen Griffgeometrie, die von der Handhabung und aus Designsicht nachteilig ist. Die ebenfalls bekannte Befestigung der Kunststoffgriffe mittels metallischer Ringe, siehe z.B. EP 1 396 220 A1, ist ebenfalls nachteilig für das Design.

Weiterhin bekannt sind geklebte Verbindungen, die eine große Design-Freiheit ermöglichen, aber andere Nachteile aufweisen. So ist hier die Auswahl der Kunststoffe eingeschränkt, da sich nicht alle gut verkleben lassen. Außerdem kann sich über lange Zeit, oder bei falscher Verarbeitung (z.B. Verschmutzungen) die Verklebung lösen.

Die WO 2008/114283 A1 offenbart Merkmale, die unter den Oberbegriff des Anspruchs 1 fallen.

### DARSTELLUNG DER ERFINDUNG

Es ist eine Aufgabe der vorliegenden Erfindung, eine kompakte Befestigungsmöglichkeit, mit der ein Kunststoffgriff an einem Behälter befestigt werden kann, bereit zu stellen, insbesondere eine kompakte Befestigungsmöglichkeit für einen Kunststoffgriff an einem Glasbehälter. Durch die kompakte Bauweise kann die Geometrie des Griffes maximal frei gestaltet werden und somit ist es möglich einen Vollkunststoffbehälter und einen Glasbehälter mit einem Kunststoffgriff optisch gleich zu gestalten. Eine weitere Aufgabe der vorliegenden Erfindung ist es, dass die Befestigungspunkte von außen nicht erkennbar sind, anders als z. B. bei Metallringen. Weiterhin soll die Befestigung über eine lange Zeit eine zuverlässige Verbindung des Griffes mit dem Behälter gewährleisten.

Erfindungsgemäß wird diese Aufgabe durch ein Haushaltsgerät mit den Merkmalen des Anspruchs 1 gelöst. Bevorzugte Merkmale von Ausführungsformen finden sich in den Unteransprüchen.

Die vorliegende Erfindung umfasst einen Behälter für Haushaltsgeräte. Der Behälter weist einen Griff, eine umlaufende äußere Seitenwand und zumindest eine Öffnung auf der Oberseite auf. Weiterhin weist der Behälter zumindest ein mit der Seitenwand integrales Befestigungselement auf. Das Befestigungselement ist ein Haken, der sich in einer ersten Richtung von der Seitenwand nach außen erstreckt und in einer zweiten Richtung im Wesentlichen parallel zur Seitenwand in Richtung der Öffnung erstreckt. Das Befestigungselement weist somit einen Freiraum zwischen dem sich in der zweiten Richtung im Wesentlichen parallel zur Seitenwand erstreckenden Abschnitt und der Seitenwand auf, der sich von dem in der ersten Richtung erstreckenden Abschnitt in Richtung der Öffnung erstreckt. Dabei geht der Griff über das zumindest eine Befestigungselement eine formschlüssige Verbindung mit dem Behälter ein.

Durch das hakenförmige Befestigungselement ist eine kompakte Befestigungsmöglichkeit gegeben, die es ermöglicht einen Griff frei zu gestalten und in der gleichen Gestaltungsform an Behältern aus unterschiedlichen Materialien sicher zu befestigen.

In einer bevorzugten Ausführungsform ist der Behälter ein Glasbehälter, bevorzugt ein Glaskrug.

Glaskrüge weisen einen höheren Aufwand für eine Befestigung von zusätzlichen Elementen, wie Griffen oder Sicherheitselementen, auf, da sie spröde und nicht elastisch sind. Durch diese Eigenschaften können gängige Befestigungsmethoden wie Verschraubungen oder Schnapphakenverbindungen nicht eingesetzt werden. Um diese Einzusetzen müssen Hilfsmittel wie Metallringe oder Kunststoffverkleidungen benutzt werden. Lösungen mit diesen Hilfsmitteln können jedoch den optischen Eindruck eines Produktes beinträchtigen. Dies gilt insbesondere, da Glaskrüge häufig bei höherwertigen Produkten zum Einsatz kommen. Bei diesen ist es das technische Ziel mit einer möglichst kleinen Befestigungsfläche zusätzliche Elemente zu befestigen, um den optischen Eindruck nicht zu stören.

Weiter bevorzugt ist der Griff aus Kunststoff. Ein Griff aus Kunststoff weist viele gewünschte Eigenschaften für die Gestaltung auf. So ist dieser sowohl leicht als auch in der Lage, komplexere Innengeometrien aufzuweisen und mit diesen zusätzlich gewünschte Elemente aufzunehmen. Außerdem lässt er sich kostengünstig in komplexere und optisch ansprechende Formen bringen.

Weiter bevorzugt weist der Griff eine innere Griffschale, einer äußere Griffschale und zumindest ein Halteelement auf. Dabei sind bevorzugt die innere Griffschale und das Halteelement so angeordnet, dass sie die formschlüssige Verbindung mit dem Befestigungselement eingehen.

Das Halteelement weist einen Vorsprung auf, der in den Haken eingreift, wodurch das Halteelement und die innere Griffschale in der ersten Richtung festgelegt sind. Gleichzeitig ist das Haltelement in der zweiten Richtung mit der relativ zum Haken gegenüberliegenden inneren Griffschale verbunden, wodurch das Haltelement und die innere Griffschale auch in der zweiten Richtung festgelegt sind. In einer Ausführungsform ist dabei das zumindest eine Halteelement mit der inneren Griffschale durch zumindest eine Verschraubung verbunden.

Durch die Ausführung des Griffs in zweiteiliger Form, mit einer inneren Griffschale und einer äußeren Griffschale, kann die innere Griffschale mit dem Halteelement sicher an dem Behälter befestigt werden und anschließend die Verbindung inklusive des Befestigungselements und des Halteelements mit der äußeren Griffschale abgedeckt werden. Durch diese Gestaltung kann der Griff kompakt ausgeführt werden und bleibt in seiner Form vielfältig anpassbar. Auch für eine Ausführung von verschiedenen Modellvarianten für den Behälter weist diese Ausführungsform Vorteile auf. So lässt sich in einer für den Einsteigermarkt gedachten Behältervariante aus Kunststoff beispielsweise die innere Griffschale direkt als Teil des Grundkörpers des Behälters herstellen, z. B. durch Spritzguss, während an einem Behälter aus Glas, für ein qualitativ höherwertiges Produkt, ein optisch identischer Griff zum Einsatz kommen kann, welcher wie oben beschrieben über ein Befestigungselement befestigt wird. Ebenso wäre es möglich, auch bei einem Kunststoffbehälter das erfindungsgemäße angeformte Befestigungselement zu nutzen. In beiden Fällen wird sowohl der optische Unterschied zwischen den Varianten als auch die Varianz der Griffteile verringert, es können mehr Gleichteile verwendet werden und somit Kosten reduziert werden.

In einer bevorzugten Weiterbildung weist der Behälter ein zweites Befestigungselement auf, der Griff weist ein zweites Halteelement auf und bevorzugt sind die innere Griffschale und das zweite Halteelement so angeordnet, dass sie eine zweite formschlüssige Verbindung mit dem zweiten Befestigungselement eingehen.

Über ein zweites Befestigungselement lässt sich ein Griff an zwei Stellen des Behälters befestigen, was zu einer erhöhten Sicherheit der Griffbefestigung führt, da beide Enden des Griffes am Behälter fixiert werden können. Bei einer Befestigung des Griffes an nur einem Befestigungselement kann es, je nach Gestaltung des Griffs, zu einer Einleitung von Momenten durch den vom Griff erzeugten Hebelarm kommen. Diese müssen in dem Fall durch den Griff und das Befestigungselement aufgenommen werden. Eine momentenfreie Krafteinleitung ist mechanisch besser und belastet sowohl den Griff als auch des Befestigungselement geringer. Zusätzlich sind zwei Befestigungselemente besser dazu geeignet, höhere Kräfte aufzunehmen als ein einzelnes Befestigungselement. Ebenso wäre es bei zwei Befestigungselementen möglich, beide Befestigungselemente, bei gleicher Kraftaufnahme, kleiner zu dimensionieren und ein für den Endkunden ansprechenderes Produkt mit einem geringer dimensionierten Griff anzubieten.

In einer weiteren Ausführungsform sind das zweite Befestigungselement, das zweite Halteelement und die zweite formschlüssige Verbindung entsprechend dem ersten Befestigungselement, dem ersten Halteelement und der ersten formschlüssigen Verbindung ausgeführt. Unter "entsprechend dem ersten Befestigungselement, dem ersten Halteelement und der ersten formschlüssigen Verbindung ausgeführt" ist in diesem Zusammenhang zu verstehen, dass das zweite Befestigungselement auch ein Haken ist, der sich in einer ersten Richtung von der Seitenwand nach außen erstreckt und in einer zweiten Richtung im Wesentlichen parallel zur Seitenwand in Richtung der oberen Öffnung erstreckt. Das zweite Halteelement entspricht dem ersten Halteelement und weist einen Vorsprung auf, der in den Haken des zweiten Befestigungselements eingreift, wodurch das zweite Halteelement und die innere Griffschale in der ersten Richtung festgelegt sind. Gleichzeitig ist das zweite Haltelement in der zweiten Richtung mit der relativ zum Haken des zweiten Befestigungselementes gegenüberliegenden inneren Griffschale verbunden, wodurch das zweite Haltelement und die innere Griffschale auch in der zweiten Richtung festgelegt sind.

Über eine Verwendung der gleichen Ausführung der Befestigungselemente und Haltelemente kann die Vielfalt der benötigten Teile reduziert werden und die Arbeitsschritte bei der Montage werden durch Wiederholung vereinfacht.

Weiter bevorzugt weist der Behälter eine zweite Öffnung auf, wobei die zweite Öffnung auf der Unterseite des Behälters angeordnet ist. Weiterhin kann der Behälter eine Verschlusseinheit aufweisen, die dazu angeordnet ist die zweite Öffnung zu verschließen. Der Griff kann über das Befestigungselement und die Verschlusseinheit an dem Behälter befestigt sein.

In dieser Ausführungsform weist der Behälter eine obere Öffnung und eine untere Öffnung auf. Die untere Öffnung kann dabei durch die Verschlusseinheit geschlossen werden. Die Verschlusseinheit kann dabei beispielsweise ein Arbeitsmittel aufweisen, etwa ein rotierbares Messer, welches durch die Verschlusseinheit im Inneren des Behälters angeordnet wird.

Ebenso ermöglicht eine Verschlusseinheit eine weitere Möglichkeit der Befestigung eines Griffes an dem Behälter. Z. B. bei der Verwendung eines Glasbehälters kann die Verschlusseinheit aus Kunststoff ausgeführt sein und eine kostengünstige Verbindung zu einem unteren Ende eines Griffes ermöglichen, etwa durch eine Schnappverbindung. Die Verschlusseinheit kann jedoch ebenso ein erfindungsgemäßes Befestigungselement aufweisen.

Das erfindungsgemäße Haushaltsgerät weist weiterhin ein Gehäuse auf. Das Gehäuse umfasst dabei ein elektrisch betriebenes Wirkmittel, eine Sicherheitsvorrichtung, einen Sockel und einen Deckel. Die Sicherheitsvorrichtung ist so im Stromkreis zur Stromeinspeisung des Wirkmittels angeordnet, dass diese den Stromkreis nur schließt, wenn die Sicherheitsvorrichtung betätigt wird. Der Sockel ist weiterhin dazu ausgestaltet, den Behälter aufzunehmen, und der Deckel ist dazu ausgestaltet, die erste Öffnung des Behälters zu verschließen.

Der Griff des Behälters erstreckt sich dabei im Wesentlichen über die gesamte Höhe des Behälters und weist einen Hohlraum auf. In dem Hohlraum ist ein Sicherheitselement so angeordnet, dass es die Sicherheitsvorrichtung betätigt, wenn der Behälter mit dem Deckel verschlossen ist.

Mit einem solchen erfindungsgemäßen Haushaltsgerät ist es möglich, einen sicheren Verschluss des Behälters mit dem Deckel zu gewährleisten bevor das Wirkmittel betätigt werden kann. Die Sicherung wird am besten als ein mechanisches Sicherheitselement ausgeführt, welches auch bei Verschmutzung oder unsachgemäßer Handhabung gewährleistet, dass der Stromkreis des Wirkmittels nicht geschlossen wird, wenn der Behälter nicht ordnungsgemäß verschlossen ist. Ebenso wäre es denkbar, das Sicherheitselement als einen elektrischen Leiter auszuführen, der die sichere Position des Deckels über einen elektrischen Schhalter, ein induktives oder optisches Signal, oder ein RFID Systemerfasst und daraufhin den Stromkreis des Wirkmittels schließt. Als Sicherheitsvorrichtung zum Schließen eines Stromkreises sind dem Fachmann verschiedene Lösungen bekannt, die alle hier zum Einsatz kommen können.

Durch den sicher verschlossenen Deckel können potentielle Unfälle im Haushalt vermieden werden, etwa die Betätigung der Klingeneinheit eines Mixers oder die Erhitzung eines Wasserkochers während der Deckel nicht verschlossen ist. In diesem Fall kann der Benutzer des Haushaltsgeräts zu Schaden kommen, wenn während des Betriebs in den Behälter gefasst wird.

In einer bevorzugten Weiterbildung ist der Behälter des Haushaltsgeräts ein Behälter, der eine zweite Öffnung aufweist, wobei die Öffnung auf der Unterseite des Behälters angeordnet ist. Weiterhin weist der Behälter eine Verschlusseinheit auf, die dazu angeordnet ist die zweite Öffnung zu verschließen. Der Griff ist in dieser Weiterbildung über das Befestigungselement und die Verschlusseinheit an dem Behälter befestigt.

Das Wirkmittel ist ein Elektromotor, dessen Abtriebswelle den Sockel aus dem Gehäuse nach außen durchquert.

Im Verschlussmittel ist ein Arbeitswerkzeug angeordnet, welches mit der Abtriebswelle des Motors verbunden ist, wenn der Behälter auf dem Sockel angeordnet ist. Das Arbeitswerkzeug ist dabei bevorzugt eine rotierbare Klingeneinheit.

In diesem Fall ist das Haushaltsgerät ein Mixer oder Blender, bei dem es besonders wichtig ist, dass kein Benutzer des Haushaltsgeräts während des Betriebs in Kontakt mit der Klingeneinheit kommt, da dies zu schwerwiegenden Verletzungen führen kann. Ein solcher Fall ist bei einem geöffneten Deckel nicht unwahrscheinlich, etwa beim Nachfüllen oder Nachdrücken des Inhalts des Behälters.

In einer Weiterbildung ist der Deckel dazu ausgestaltet mit der ersten Öffnung des Behälters zu verriegeln. Weiter bevorzugt verriegelt der Deckel mit der ersten Öffnung über einen Bajonettverschluss.

Eine Verriegelung des Deckels gewährleistet zusätzliche Sicherheit und eine einfachere Handhabung. Über die Verriegelung ist gewährleistet, dass der Deckel seine Position auf der Öffnung des Behälters während des Betriebs einhält, ohne dass der Benutzer den Deckel manuell in Position halten muss. Ein Bajonettverschluss hat weiterhin die Eigenschaft, dass der Deckel um seine Höhenachse gedreht wird nach dem Aufsetzen des Deckels auf den Behälter. Hierdurch kann die auf das Sicherheitselement wirkende Wirkbewegung variiert werden. So kann sie eine vertikale, in Richtung der Höhenachse des Behälters oder des Deckels wirkende Bewegung sein, ebenso kann die Wirkbewegung auch die Rotation des Deckels sein.

Weitere bevorzugte Merkmale und Vorteile ergeben sich aus der nachfolgenden Figurenbeschreibung und der Gesamtheit der Patentansprüche.

### Kurze Figurenbeschreibung

Die Erfindung wird im folgenden Abschnitt anhand von Ausführungsbeispielen unter Bezugnahme auf die beiliegenden Figuren näher erläutert.

Figur 1a zeigt einen Behälter zur Verwendung in einem Haushaltsgerät gemäß einem Ausführungsbeispiel der vorliegenden Erfindung.
Figur 1b zeigt den Behälter aus Fig. 1a in einer Explosionsdarstellung.
Figur 2 zeigt das angeformte Befestigungselement des Behälters aus Fig. 1a und Fig. 1b in einer Detailansicht.
Figur 3 zeigt das Halteelement aus Fig. 1a und Fig. 1b in einer perspektivischen Darstellung.
Figur 4 zeigt die Befestigung der inneren Griffschale über des Befestigungselement und das Halteelement aus Fig. 1a und Fig. 1b in einer Schnittdarstellung.

In den Figuren bezeichnen gleiche Bezugszeichen gleiche oder funktionsgleiche Komponenten, soweit nichts Gegenteiliges angegeben ist.

### Wege zur Ausführung der Erfindung

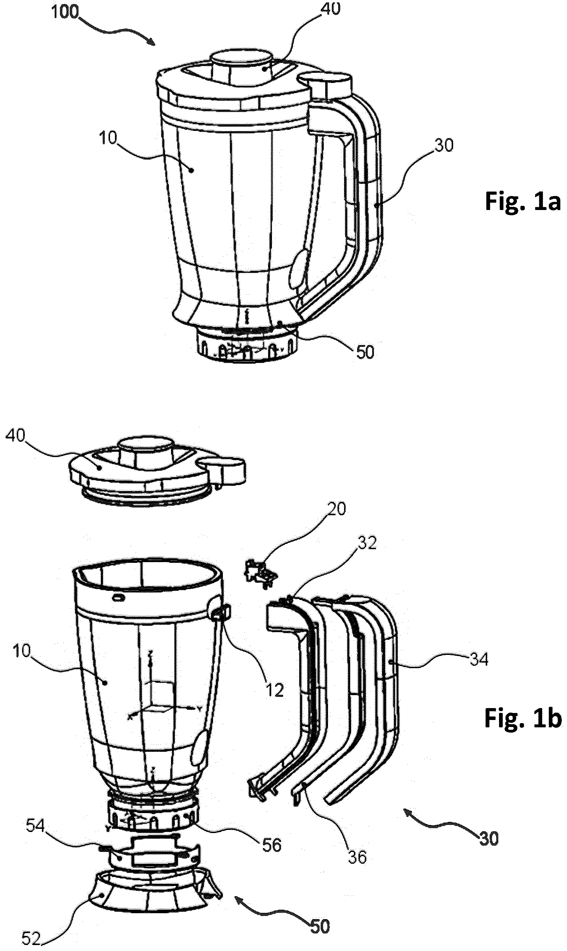

In Fig. 1a und Fig. 1b ist eine Ausführungsform eines Behälters 100 für Haushaltsgeräte gezeigt. In dieser Ausführungsform ist der Behälter ein Glasbehälter 10 für einen Standmixer. Der Glasbehälter 10 weist eine obere Öffnung auf, die durch einen Deckel 40 verschlossen werden kann, und eine untere Öffnung, die mit einem Gewinde versehen ist. Auf das Gewinde kann ein Verschlussmittel 50 mit einem Arbeitswerkzeug, z.B. einem rotierenden Messer im Falle des Standmixers, aufgeschraubt werden. Das Verschlussmittel 50 weist eine Kunststoffschürze 52, einen Befestigungsring 54 und einen Schraubring 56 auf.

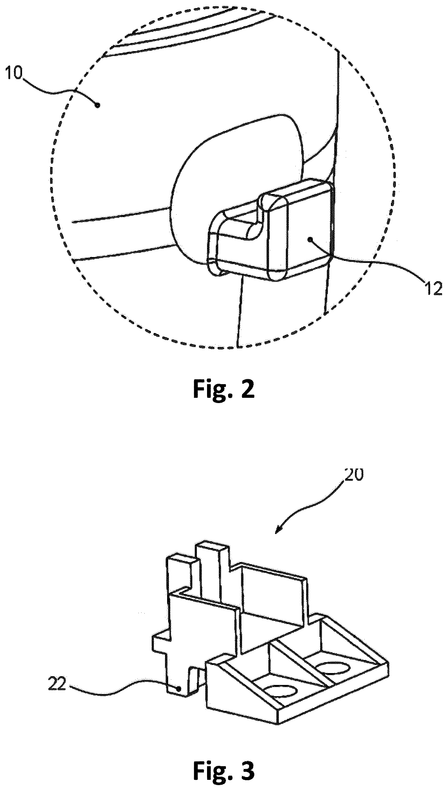

Der Behälter weist ein Befestigungselement 12, dargestellt in Fig. 2, auf, welches in dieser Ausführungsform ein angeformtes Glaselement ist. Das Glaselement 12 weist eine Hakenform auf und erstreckt sich in einer ersten Richtung radial von der Außenfläche des Behälters 10 nach außen und anschließend in einer zweiten Richtung zur oberen Öffnung des Glasbehälters hin. An diesem Glaselement 12 wird der Griff 30 befestigt. In dieser Ausführungsform besteht der Griff 30 aus vier Bauteilen, einer inneren Griffschale 32, einem Halteelement 20, dargestellt in Fig. 3, einer äußeren Griffschale 34 und einem Sicherheitselement 36.

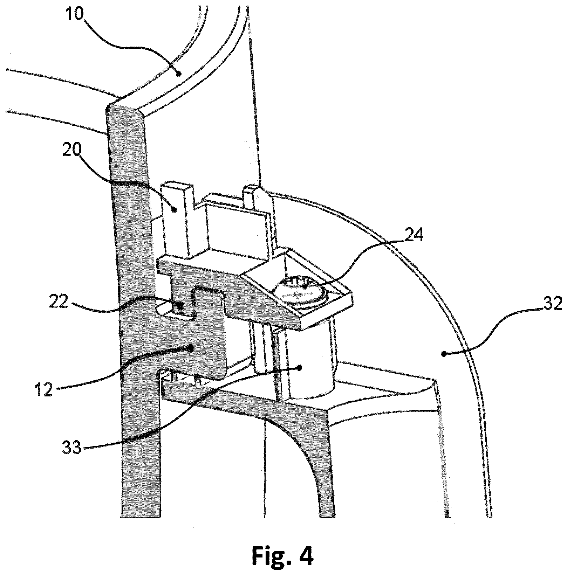

Fig. 4 zeigt die Anordnung der inneren Griffschale 32 und des Halteelements 20 um das angeformte Befestigungselement 12 in einer Schnittdarstellung. Die innere Griffschale 32 stützt sich mit einem Absatz von unten gegen das Befestigungselement 12 ab. Von der inneren Griffschale 32 aus, relativ zum Befestigungselement 12, gegenüber liegend ist das Halteelement 20 angeordnet. Das Halteelement 20 greift von oben mit einem Vorsprung 22 in die Hakenform des Befestigungselementes 12 ein und wird mit der inneren Griffschale 32 verschraubt, indem Schrauben 24 durch das Halteelement 20 in die Schraubdome 33 der inneren Griffschale geschraubt werden. Außen um die innere Griffschale 32 angeordnet ist das Sicherheitselement 36. Abschließend wird die äußere Griffschale 34 auf die innere Griffschale 32 aufgesteckt und z. B. durch Schnapphaken in Position gehalten. Das Sicherheitselement 36 ist zwischen innerer Griffschale 32 und äußerer Griffschale 34 angeordnet, sodass das Sicherheitselement 36 von dem Deckel 40 in Richtung der unteren Öffnung gedrückt wird, wenn dieser auf dem Glasbehälter 10 angeordnet ist.

In dieser Ausführungsform wird nur das obere Ende des Griffes 30 mit dem Befestigungselement 12 am Behälter befestigt. Das untere Ende des Griffes 30 wird über das auf die untere Öffnung des Glasbehälters 10 geschraubte Verschlussmittel 50 befestigt, etwa über einen Schnapphaken an der Kunststoffschürze 52 oder über eine Verschraubung mit dem Befestigungsring 54. Ebenso denkbar wäre es jedoch, auch an einer weiteren Stelle des Glasbehälters 10 ein zweites Befestigungsmittel entsprechend dem ersten Befestigungsmittel 12 anzuordnen, und somit den Griff 30 über ein weiteres Halteelement 20 zu fixieren.

Bei dieser Ausführungsform sind die Toleranzen des Halteelements 20 und der inneren Griffschale 32 so gewählt, dass Maßabweichungen aufgrund von Herstelltoleranzen des angeformten Glaselements 12 kompensiert werden. Somit ist eine sichere Verbindung zwischen dem Halteelement 20 und der Griffschale 32 gewährleistet. Die Verschraubung des Haltelements 20 mit den Schraubdomen 33 der inneren Griffschale 32 trägt zu einem weiteren Toleranzausgleich bei.

Innerhalb der Griffschale 30 ist ein Sicherheitselement 36 angeordnet. Dieses Sicherheitselement 36 ist so gestaltet, dass bei einem Verschließen des Behälters 10 mit dem Deckel 40 das Sicherheitselement 36 innerhalb der Griffschale 30 in Richtung der unteren Öffnung geschoben wird und am unteren Ende aus der Griffschale 30 austritt. Dieses Sicherheitselement 36 dient dazu, dass bei einer Befestigung des Behälters 10 auf dem Gehäuse des Standmixers das Sicherheitselement 36 in das Gehäuse eindringt und über ein dort angeordnetes Schaltelement den Schaltkreis zur Betätigung des Motors schließt. Somit ist gewährleistet, dass die Arbeitswerkzeuge innerhalb des Behälters 10 nur dann arbeiten, wenn der Behälter 10 ordnungsgemäß verschlossen ist. Dies ist insbesondere dann notwendig, wenn die Arbeitswerkzeuge scharfe Kanten aufweisen, etwa wie bei den rotierenden Klingen eines Mixers.

### Bezugszeichenliste

- 10: Glasbehälter
- 12: Befestigungselement
- 20: Halteelement
- 22: Vorsprung
- 24: Schraube
- 30: Griff
- 32: innere Griffschale
- 33: Schraubdom
- 34: äußere Griffschale
- 36: Sicherheitselement
- 40: Deckel
- 50: Verschlussmittel
- 52: Kunststoffschürze
- 54: Befestigungsring
- 56: Schraubring
- 100: Behälter

## Patentansprüche

1. Haushaltsgerät zur Lebensmittelverarbeitung, aufweisend einen Behälter (10) , wobei der Behälter (10) einen Griff (30), eine umlaufende äußere Seitenwand und zumindest eine Öffnung auf der Oberseite aufweist,
wobei der Behälter zumindest ein mit der Seitenwand integrales Befestigungselement (12) aufweist,
**dadurch gekennzeichnet, dass** das Befestigungselement (12) ein Haken ist und sich in einer ersten Richtung von der Seitenwand nach außen erstreckt und in einer zweiten Richtung im Wesentlichen parallel zur Seitenwand erstreckt,
wobei der Griff (30) über das zumindest eine Befestigungselement (12) eine formschlüssige Verbindung mit dem Behälter eingeht,
**dadurch gekennzeichnet, dass**
das Haushaltsgerät ein Gehäuse aufweist, das Gehäuse ferner umfassend:
ein elektrisch betriebenes Wirkmittel,
eine Sicherheitsvorrichtung, die im Stromkreis zur Stromeinspeisung des Wirkmittels angeordnet ist und den Stromkreis nur schließt, wenn die Sicherheitsvorrichtung betätigt wird,
einen Sockel, wobei der Sockel dazu ausgestaltet ist den Behälter (10) aufzunehmen,
einen Deckel (40), wobei der Deckel (40) dazu ausgestaltet ist, die erste Öffnung des Behälters (10) zu verschließen,
wobei der Griff (30) sich im Wesentlichen über die gesamte Höhe des Behälters (10) erstreckt und einen Hohlraum aufweist,
wobei in dem Hohlraum ein Sicherheitselement (36) angeordnet ist,
wobei das Sicherheitselement (36) so angeordnet ist, dass es die Sicherheitsvorrichtung betätigt, wenn der Behälter (10) mit dem Deckel (40) verschlossen ist.

2. Haushaltsgerät nach Anspruch 1, wobei der Behälter (10) ein Glasbehälter ist, bevorzugt ein Glaskrug.

3. Haushaltsgerät nach Anspruch 1 oder 2, wobei der Griff (30) aus Kunststoff ist.

4. Haushaltsgerät nach einem der Ansprüche 1 bis 3, wobei der Griff (30) eine innere Griffschale (32), eine äußere Griffschale (34) und zumindest ein Halteelement (20) aufweist,
wobei bevorzugt die innere Griffschale (32) und das Halteelement (20) so angeordnet sind, dass sie die formschlüssige Verbindung mit dem Befestigungselement eingehen,
wobei das Halteelement (20) einen Vorsprung (22) aufweist, der in das Befestigungselement (12) eingreift, wodurch das Halteelement (20) und die innere Griffschale (32) in der ersten Richtung festgelegt sind,
wobei das Haltelement (20) in der zweiten Richtung mit der relativ zum Befestigungselement (12) gegenüberliegenden inneren Griffschale (32) verbunden ist, wodurch das Haltelement (20) und die innere Griffschale (32) in der zweiten Richtung festgelegt sind,
wobei weiter bevorzugt das zumindest eine Halteelement (20) mit der inneren Griffschale (32) durch zumindest eine Verschraubung (24) verbunden ist.

5. Haushaltsgerät nach Anspruch 4, wobei der Behälter (10) ein zweites Befestigungselement aufweist,
wobei der Griff ein zweites Halteelement aufweist,
wobei bevorzugt die innere Griffschale (32) und das zweite Halteelement so angeordnet sind, dass sie eine zweite formschlüssige Verbindung mit dem zweiten Befestigungselement eingehen,
wobei weiter bevorzugt das zweite Befestigungselement, das zweite Halteelement und die zweite formschlüssige Verbindung entsprechend dem ersten Befestigungselement, dem ersten Halteelement und der ersten formschlüssigen Verbindung ausgeführt sind.

6. Haushaltsgerät nach einem der Ansprüche 1 bis 5, wobei der Behälter (10) eine zweite Öffnung aufweist,
wobei die zweite Öffnung auf der Unterseite des Behälters (10) angeordnet ist,
wobei der Behälter (10) eine Verschlusseinheit (50) aufweist, die dazu angeordnet ist, die zweite Öffnung zu verschließen, und weiter bevorzugt wobei der Griff (30) über das Befestigungselement (12) und die Verschlusseinheit (50) an dem Behälter (10) befestigt ist.

7. Haushaltsgerät nach Anspruch 6,
wobei das Wirkmittel ein Elektromotor ist, wobei die Abtriebswelle des Motors den Sockel durchquert,
wobei der Behälter (10) ein Arbeitswerkzeug aufweist und das Arbeitswerkzeug in der Verschlusseinheit (50) angeordnet ist und mit der Abtriebswelle des Motors verbunden ist, wenn der Behälter (10) auf dem Sockel angeordnet ist,
wobei bevorzugt das Arbeitswerkzeug eine rotierbare Klingeneinheit ist.

8. Haushaltsgerät nach Anspruch 7, wenn von Anspruch 2 abhängig, wobei die Verschlusseinheit (50) aus Kunststoff ausgeführt ist.

9. Haushaltsgerät nach einem der vorhergehenden Ansprüche, wobei der Deckel (40) dazu ausgestaltet ist mit der ersten Öffnung des Behälters (10) zu verriegeln, bevorzugt wobei der Deckel (40) mit der ersten Öffnung über einen Bajonettverschluss verriegelt.

10. Haushaltsgerät nach einem der vorhergehenden Ansprüche, wobei das Haushaltsgerät ein Mixer ist.

11. Haushaltsgerät nach einem der vorhergehenden Ansprüche, wobei sich das Befestigungselement in der zweiten Richtung in Richtung der Öffnung erstreckt.

12. Haushaltsgerät nach einem der vorhergehenden Ansprüche, wobei das Befestigungselement einen Freiraum zwischen dem sich in der zweiten Richtung im Wesentlichen parallel zur Seitenwand erstreckenden Abschnitt und der Seitenwand aufweist, wobei der Freiraum sich in Richtung der Öffnung erstreckt.

13. Haushaltsgerät nach einem der vorhergehenden Ansprüche, wobei das Sicherheitselement (36) als ein mechanisches Sicherheitselement ausgeführt ist.

14. Haushaltsgerät nach einem der Ansprüche 1 bis 12, wobei das Sicherheitselement als ein elektrischer Leiter ausgeführt ist, der die sichere Position des Deckels über einen elektrischen Schalter, ein induktives oder optisches Signal, oder ein RFID System erfasst und daraufhin den Stromkreis des Wirkmittels schließt.

15. Haushaltsgerät nach einem der vorhergehenden Ansprüche 4 bis 14, sofern von Anspruch 4 abhängig, wobei die äußere Griffschale (34) auf die innere Griffschale (32) aufgesteckt und bevorzugt durch Schnapphaken in Position gehalten ist.

## Claims

1. Domestic appliance for food processing, having a container (10), wherein the container (10) has a handle (30), a circumferential outer side wall and at least one opening on the top,
wherein the container has at least one fastening element integral with the side wall (12),
**characterised in that** the fastening element (12) is a hook and extends outwards from the side wall in a first direction and extends substantially parallel to the side wall in a second direction,
wherein the handle (30) enters into a form-locking connection with the container via the at least one fastening element (12),
**characterised in that**
the domestic appliance has a housing, the housing further comprising:
an electrically operated active element,
a safety device which is arranged in the circuit for the current supply to the active element and only closes the circuit when the safety device is actuated,
a base, wherein the base is designed to receive the container (10),
a lid (40), wherein the lid (40) is designed to close the first opening of the container (10),
wherein the handle (30) substantially extends over the entire height of the container (10) and has a cavity,
wherein a safety element (36) is arranged in the cavity,
wherein the safety element (36) is arranged in such a way that it actuates the safety device when the container (10) is closed with the lid (40).

2. Domestic appliance according to claim 1, wherein the container (10) is a glass container, preferably a glass jug.

3. Domestic appliance according to claim 1 or 2, wherein the handle (30) is made of plastic.

4. Domestic appliance according to one of the claims 1 to 3, wherein the handle (30) has an inner handle shell (32), an outer handle shell (34) and at least one retaining element (20),
wherein, preferably, the inner handle shell (32) and the retaining element (20) are arranged in such a way that they enter into the form-locking connection with the fastening element,
wherein the retaining element (20) has a projection (22) that engages in the fastening element (12), as a result of which the retaining element (20) and the inner handle shell (32) are fixed in the first direction,
wherein the retaining element (20) is connected in the second direction to the inner handle shell (32) opposite the fastening element (12), as a result of which the retaining element (20) and the inner handle shell (32) are fixed in the second direction,
wherein, further preferably, at least one retaining element (20) is connected to the inner handle shell (32) by at least one screw connection (24).

5. Domestic appliance according to claim 4, wherein the container (10) has a second fastening element,
wherein the handle has a second retaining element,
wherein, preferably, the inner handle shell (32) and the second retaining element are arranged in such a way that they enter into a second form-locking connection with the second fastening element,
wherein, further preferably, the second fastening element, the second retaining element and the second form-locking connection correspond in design to the first fastening element, the first retaining element and the first form-locking connection.

6. Domestic appliance according to one of the claims 1 to 5, wherein the container (10) has a second opening,
wherein the second opening is arranged on the underside of the container (10),
wherein the container (10) has a closure unit (50) which is arranged to close the second opening and, further preferably, wherein the handle (30) is fastened to the container (10) via the fastening element (12) and the closure unit (50).

7. Domestic appliance according to claim 6,
wherein the active element is an electric motor, wherein the output shaft of the motor passes through the base, wherein the container (10) has a working tool and the working tool is arranged in the closure unit (50) and is connected to the output shaft of the motor when the container (10) is arranged on the base,
wherein the working tool is preferably a rotatable blade unit.

8. Domestic appliance according to claim 7, where dependent on claim 2, wherein the closure unit (50) is made of plastic.

9. Domestic appliance according to one of the preceding claims, wherein the lid (40) is designed to lock together with the first opening of the container (10), wherein the lid (40) is preferably locked together with the first opening via a bayonet closure.

10. Domestic appliance according to one of the preceding claims, wherein the domestic appliance is a mixer.

11. Domestic appliance according to one of the preceding claims, wherein the fastening element extends in the second direction in the direction of the opening.

12. Domestic appliance according to one of the preceding claims, wherein the fastening element has a clearance between the section extending in the second direction substantially parallel to the side wall and the side wall, wherein the clearance extends in the direction of the opening.

13. Domestic appliance according to one of the preceding claims, wherein the safety element (36) is designed as a mechanical safety element.

14. Domestic appliance according to one of the claims 1 to 12, wherein the safety element is designed as an electrical conductor that detects the safe position of the lid via an electrical switch, an inductive or optical signal or an RFID system and then closes the circuit of the active element.

15. Domestic appliance according to one of the preceding claims 4 to 14, where dependent on claim 4, wherein the outer handle shell (34) is plugged onto the inner handle shell (32) and preferably held in position by snap hooks.

## Revendications

1. Appareil électroménager pour la transformation d'aliments, présentant un récipient (10), dans lequel le récipient (10) présente une poignée (30), une paroi latérale extérieure circonférentielle et au moins une ouverture sur la face supérieure,
dans lequel le récipient présente au moins un élément de fixation (12) d'un seul tenant avec la paroi latérale,
**caractérisé en ce que** l'élément de fixation (12) est un crochet et s'étend dans une première direction depuis la paroi latérale vers l'extérieur et s'étend dans une seconde direction sensiblement parallèle à la paroi latérale,
dans lequel la poignée (30) forme avec le récipient une liaison par complémentarité de formes par l'intermédiaire de l'au moins un élément de fixation (12),
**caractérisé en ce que** l'appareil électroménager présente un boîtier, le boîtier comprenant en outre :
un moyen d'action entraîné électriquement,
un dispositif de sécurité qui est disposé dans le circuit électrique pour l'alimentation électrique du moyen d'action et ne ferme le circuit électrique que lorsque le dispositif de sécurité est actionné,
un socle, dans lequel le socle est conçu pour accueillir le récipient (10),
un couvercle (40), dans lequel le couvercle (40) est conçu pour fermer la première ouverture du récipient (10),
dans lequel la poignée (30) s'étend sensiblement sur la hauteur totale du récipient (10) et présente une cavité,
dans lequel un élément de sécurité (36) est disposé dans la cavité,
dans lequel l'élément de sécurité (36) est disposé de sorte qu'il actionne le dispositif de sécurité lorsque le récipient (10) est fermé avec le couvercle (40).

2. Appareil électroménager selon la revendication 1, dans lequel le récipient (10) est un récipient en verre, de préférence une cruche en verre.

3. Appareil électroménager selon la revendication 1 ou 2, dans lequel la poignée (30) est en matière plastique.

4. Appareil électroménager selon l'une quelconque des revendications 1 à 3, dans lequel la poignée (30) présente une coque de poignée interne (32), une coque de poignée externe (34) et au moins un élément de retenue (20),
dans lequel de préférence la coque de poignée interne (32) et l'élément de retenue (20) sont disposés de sorte qu'ils forment la liaison par complémentarité de formes avec l'élément de fixation,
dans lequel l'élément de retenue (20) présente une saillie (22) qui s'engrène dans l'élément de fixation (12), moyennant quoi l'élément de retenue (20) et la coque de poignée interne (32) sont fixés dans la première direction,
dans lequel l'élément de retenue (20) est relié dans la seconde direction à la coque de poignée interne (32) opposée par rapport à l'élément de fixation (12), moyennant quoi l'élément de retenue (20) et la coque de poignée interne (32) sont fixés dans la seconde direction,
dans lequel plus préférentiellement l'au moins un élément de retenue (20) est relié à la coque de poignée interne (32) par le biais d'au moins une fixation par vis (24).

5. Appareil électroménager selon la revendication 4, dans lequel le récipient (10) présente un second élément de fixation,
dans lequel la poignée présente un second élément de retenue,
dans lequel de préférence la coque de poignée interne (32) et le second élément de retenue sont disposés de sorte qu'ils forment une seconde liaison par complémentarité de formes avec le second élément de fixation,
dans lequel plus préférentiellement le second élément de fixation, le second élément de retenue et la seconde fixation par complémentarité de formes sont réalisés conformément au premier élément de fixation, au premier élément de retenue et à la première fixation par complémentarité de formes.

6. Appareil électroménager selon l'une quelconque des revendications 1 à 5, dans lequel le récipient (10) présente une seconde ouverture,
dans lequel la seconde ouverture est disposée sur la face inférieure du récipient (10),
dans lequel le récipient (10) présente une unité de fermeture (50) qui est disposée pour fermer la seconde ouverture et plus préférentiellement dans lequel la poignée (30) est fixée au récipient (10) par l'intermédiaire de l'élément de fixation (12) et de l'unité de fermeture (50).

7. Appareil électroménager selon la revendication 6,
dans lequel le moyen d'action est un moteur électrique, dans lequel l'arbre entraîné du moteur traverse le socle,
dans lequel le récipient (10) présente un outil de travail et l'outil de travail est disposé dans l'unité de fermeture (50) et est relié à l'arbre entraîné du moteur lorsque le récipient (10) est disposé sur le socle,
dans lequel de préférence l'outil de travail est une unité à lames rotative.

8. Appareil électroménager selon la revendication 7, lorsqu'elle dépend de la revendication 2, dans lequel l'unité de fermeture (50) est réalisée en matière plastique.

9. Appareil électroménager selon l'une quelconque des revendications précédentes, dans lequel le couvercle (40) est conçu pour se verrouiller avec la première ouverture du récipient (10), de préférence dans lequel le couvercle (40) se verrouille avec la première ouverture par l'intermédiaire d'une fermeture à baïonnette.

10. Appareil électroménager selon l'une quelconque des revendications précédentes, dans lequel l'appareil électroménager est un mixeur.

11. Appareil électroménager selon l'une quelconque des revendications précédentes, dans lequel l'élément de fixation s'étend dans la seconde direction en direction de l'ouverture.

12. Appareil électroménager selon l'une quelconque des revendications précédentes, dans lequel l'élément de fixation présente un espace libre entre la section s'étendant dans la seconde direction sensiblement parallèlement à la paroi latérale et la paroi latérale, dans lequel l'espace libre s'étend en direction de l'ouverture.

13. Appareil électroménager selon l'une quelconque des revendications précédentes, dans lequel l'élément de sécurité (36) est réalisé en tant qu'élément de sécurité mécanique.

14. Appareil électroménager selon l'une quelconque des revendications 1 à 12, dans lequel l'élément de sécurité est réalisé en tant que conducteur électrique qui détecte la position sûre du couvercle sur un commutateur électrique, un signal inducteur ou optique ou un système RFID et ensuite ferme le circuit électrique du moyen d'action.

15. Appareil électroménager selon l'une quelconque des revendications 4 à 14, dans la mesure où elle dépend de la revendication 4, dans lequel la coque de poignée externe (34) est mise sur la coque de poignée interne (32) et est de préférence maintenue en position par le biais de crochets d'encliquetage.
